Europäisches Patentamt

European Patent Office

Office européen des brevets

(11) Veröffentlichungsnummer: **0 159 495**
**B1**

(12) # EUROPÄISCHE PATENTSCHRIFT

(45) Veröffentlichungstag der Patentschrift: **27.06.90**

(51) Int. Cl.⁵: **B 01 D 53/14, C 10 K 1/14**

(21) Anmeldenummer: **85102325.9**

(22) Anmeldetag: **01.03.85**

(54) Verfahren zum Entfernen von C02 und/oder H2S aus Gasen.

(30) Priorität: **10.03.84 DE 3408851**

(43) Veröffentlichungstag der Anmeldung:
**30.10.85 Patentblatt 85/44**

(45) Bekanntmachung des Hinweises auf die
Patenterteilung:
**27.06.90 Patentblatt 90/26**

(84) Benannte Vertragsstaaten:
**AT BE DE FR GB IT NL SE**

(56) Entgegenhaltungen:
**DE-B-2 551 717**
**US-A-4 080 424**

(73) Patentinhaber: **BASF Aktiengesellschaft
Carl-Bosch-Strasse 38
D-6700 Ludwigshafen (DE)**

(72) Erfinder: **Wagner, Eckhart, Dr.
Birkenstrasse 21a
D-6701 Maxdorf (DE)**
Erfinder: **Volkamer, Klaus, Dr.
Heidelberger Ring 21
D-6710 Frankenthal (DE)**
Erfinder: **Hefner, Werner, Dr.
Danziger Strasse 1c
D-6840 Lampertheim (DE)**
Erfinder: **Wagner, Ulrich, Dr.
Knospstrasse 7
D-6703 Limburgerhof (DE)**

# Beschreibung

Die vorliegende Erfindung betrifft ein Verfahren zum Entfernen von $CO_2$ und/oder $H_2S$ aus Gasen mittels einer wäßrigen Methyldiethanolamin enthaltenden Absorptionsflüssigkeit.

In der DE—B—2 551 717 wird bereits ein Verfahren zur Entfernung von $CO_2$ und/oder $H_2S$ aus Gasen durch eine Wäsche der Gase mit physikalisch oder chemisch wirkenden Lösungsmitteln beschrieben, bei dem das aus einer zweistufigen Absorption erhaltene, mit $CO_2$ und/oder $H_2S$ beladene Lösungsmittel in zwei Entspannungsstufen bei Drucken oberhalb von Atmosphärendruck entspannt wird. Anschließend wird ein Teilstrom des entspannten Lösungsmittels in einem Ausstreifer weiter regeneriert. Das bekannte Verfahren zeichnet sich zwar durch eine hohe Wirtschaftlichkeit aus, ist jedoch noch nicht in allen Fällen zufriedenstellend.

Es wurde nun ein vorteilhaftes Verfahren gefunden zum Entfernen von $CO_2$ und/oder $H_2S$ aus $CO_2$ und/oder $H_2S$ enthaltenden Gasen, bei dem man

a) das $CO_2$ und/oder $H_2S$ enthaltende Gas in einer ersten Absorptionsstufe bei Temperaturen von 40 bis 100°C mit einer 20 bis 70 Gew.-% Methyldiethanolamin enthaltenden wäßrigen Absorptionsflüssigkeit behandelt,

b) das am Kopf der ersten Absorptionsstufe erhaltene Gas einer zweiten Absorptionsstufe zuführt, in der es zur weiteren Entfernung von $CO_2$ und/oder $H_2S$ bei Temperaturen von 30 bis 90°C mit einer 20 bis 70 Gew.-% Methyldiethanolamin enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit,

c) am Kopf der zweiten Absorptionsstufe das behandelte Gas abzieht,

d) die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt,

e) die im unteren Teil der ersten Absorptionsstufe erhaltene, mit $CO_2$ und/oder $H_2S$ beladene wäßrige Absorptionsflüssigkeit zur Regenierung in mindestens zwei Entspannungsstufen entspannt und dabei die letzte Entspannungsstufe bei vermindertem Druck gegenüber Atmosphärendruck betreibt,

f) einen am Sumpf der letzten Entspannungsstufe erhaltenen Strom der Absorptionsflüssigkeit in die erste Absorptionsstufe zurückführt,

g) einen weiteren am Sumpf der letzten und/oder vorletzten Entspannungsstufe erhaltenen Strom der Absorptionsflüssigkeit zur weiteren Regenierung einer Abstreifzone zuführt und

h) die am Sumpf der Abstreifzone erhaltene regenierte Absorptionsflüssigkeit in die zweite Absorptionsstufe zurückführt.

In einer vorteilhaften Ausführungsform des Verfahrens führt man zum Ausgleich der Wasserverluste durch in den am Kopf der zweiten Absorptionsstufe und bzw. oder aus den Entspannungsstufen und bzw. oder aus der Abstreifzone abgezogenen Gasströmen enthaltenes Wasser am Sumpf der vorletzten Entspannungsstufe eine dem Wasserverlust entsprechende Menge Wasserdampf zu.

In einer weiteren bevorzugten Ausführungsform des Verfahrens wird der verminderte Druck in der letzten Entspannungsstufe mittels eines Wasserdampfstrahlers erzeugt. Dabei kann es vorteilhaft sein, daß man das am Kopf der letzten Entspannungsstufe abgezogene Gas zusammen mit dem Wasserdampf, mit dem Wasserdampfstrahler betrieben wird, am Sumpf der vorletzten Entspannungsstufe zuführt.

Durch das Betreiben der letzten Entspannungsstufe bei vermindertem Druck wird eine regenerierte Absorptionsflüssigkeit mit einem geringerem $CO_2$ und/oder $H_2S$-Gehalt erhalten, so daß es möglich ist, geringere Mengen an Absorptionsflüssigkeit im Kreis zu führen. Hierdurch ergeben sich entsprechende Einsparungen bei den Energieverbräuchen für die Förderung der Absorptionsflüssigkeit. Gleichzeitig kann durch diese Arbeitsweise der apparative Aufwand vermindert werden, wodurch es auch zu einer Senkung der Investitionskosten kommt. Ein weiterer Vorteil des Verfahrens besteht darin, daß Wasserverluste, die in den Gaswaschanlagen durch in den am Kopf der zweiten Absorptionskolonne und der Entspannungsbehälter sowie des Abstreifers abgezogenen Gasströmen enthaltenes Wasser entstehen, durch Zuführung einer dem Wasserverlust entsprechenden Menge Wasserdampf am Sumpf der vorletzten Entspannungsstufe ausgeglichen werden können. Durch diese Arbeitsweise kann neben der Regelung des Wasserhaushaltes der Gaswaschanlage gleichzeitig der Wärmehaushalt werden, so daß ein für die Regelung des Wärmehaushaltes in der Gaswaschanlage vorhandener Wärmetauscher kleiner ausgeführt werden oder gegebenenfalls ganz wegfallen kann.

Als nach dem erfindungsgemäßen Verfahren zu behandelnde Gase kommen beispielsweise Kohlevergasungsgase, Koksofengase, Erdgase und Synthesegase in Betracht.

Die Gase weisen im allgemeinen einen $CO_2$-Gehalt von 1 bis 90 Mol.%, vorzugsweise 2 bis 90 Mol.%, inbesondere 5 bis 60 Mol.% auf. Neben dem $CO_2$ können die Gase als weiteres Sauergas $H_2S$ enthalten oder sie können $H_2S$ allein enthalten, z.B. in Mengen von wenigen Mol.-ppm, beispielsweise 1 Mol.-ppm bis 50 Mol.%, vorzugsweise 10 Mol.-ppm bis 40 Mol.%.

Als Lösungsmittel wird für das erfindungsgemäße Verfahren eine 20 bis 70 Gew%, vorzugsweise 30 bis 65 Gew.%, insbesondere 40 bis 60 Gew.% Methyldiethanolamin enthaltende wäßrige Absorptionsflüssigkeit verwendet. Zweckmäßig wird eine wäßrige Methyldiethanolaminlösung eingesetzt, z.B. eine wäßrige Lösung von Methyldiethanolamin technischer Reinheit. In einer vorteilhaften Ausführungsform des Verfahrens verwendet man eine wäßrige Methyldiethanolaminlösung, die zusätzlich 0,05 bis 1 Mol/ 1, insbesondere 0,1 bis 0,8 Mol/1, insbesondere 0,1 bis 0,6 Mol/1 eines primären Amins oder Alkanolamins wie Monoethanolamin, oder vorzugsweise eines sekundären Amins oder Alkanolamins, vorteilhaft Methylmonoethanolamin, ganz besonders vorteilhaft Piperazin, enthält.

Die 20 bis 70 Gew.-% Methyldiethanolamin enthaltende wäßrige Absorptionsflüssigkeit kann zusätzlich noch ein physikalisches Lösungsmittel enthalten. Geeignete physikalische Lösungsmittel sind beispielsweise n-Methylpyrrolidon, Tetramethylensulfon, Methanol, Oligoethylenglykoldialkylether wir Oligoethylenglykolmethylisopropylether (SEPASOLV MPE), Oligoethylenglykoldimethylether (SELEXOL). Das physikalische Lösungsmittel ist in der Absorptionsflüssigkeit im allgemeinen in Mengen von 1 bis 60 Gew.-%, vorzugsweise 10 bis 50 Gew.-%, insbesondere 20 bis 40 Gew.-%, enthalten.

Das erfindungsgemäße Verfahren wird in der Weise durchgeführt, daß das $CO_2$ und/oder $H_2S$ enthaltende Gas zunächst in der ersten Absorptionsstufe mit der Methyldiethanolamin enthaltenden Absorptionsflüssigkeit behandelt wird. Dabei werden in der ersten Absorptionsstufe Temperaturen von 40 bis 100°C, vorzugsweise 50 bis 90°C, insbesondere 60 bis 90°C aufrechterhalten. Zweckmäßig wird das zu behandelnde Gas im unteren Teil der ersten Absorptionsstufe, vorzugsweise im unteren Drittel, zugeführt und im Gegenstrom zur Absorptionsflüssigkeit geführt, die zweckmäßig im oberen Teil der ersten Absorptionsstufe, vorzugsweise im oberen Drittel, zugegeben wird. Das am Kopf der ersten Absorptionsstufe erhaltene Gas wird einer zweiten Absorptionszone zugeführt, in der es zur weiteren Entfernung von $CO_2$ und/oder $H_2S$ bei Temperaturen von 30 bis 90°C, vorzugsweise 40 bis 80°C, insbesondere 50 bis 80°C mit der Methyldiethanolamin enthaltenden Absorptionsflüssigkeit behandelt wird, die einen geringeren Gehalt an $CO_2$ und/oder $H_2S$ aufweist als die der ersten Absorptionsstufe zugeführte Absorptionsflüssigkeit. Auch bezüglich der zweiten Absorptionsstufe wird das zu behandelnde Gas zweckmäßig im unteren Teil, vorzugsweise im unteren Drittel, der zweiten Absorptionzone zugeführt und im Gegenstrom zur Absorptionsflüssigkeit geführt, die zweckmäßig im oberen Teil, vorzugsweise im oberen Drittel, der zweiten Absorptionszone zugegeben wird. Das Produktgas wird am Kopf der zweiten Absorptionszone abgezogen. Die am Boden der zweiten Absorptionsstufe erhaltene mit $CO_2$ und/oder $H_2S$ vorbeladene wäßrige Absorptionsflüssigkeit wird am Kopf der ersten Absorptionsstufe zugeführt. In der ersten und zweiten Absorptionsstufe werden im allgemeinen Druck von 5 bis 110 bar, vorzugsweise 10 bis 100 bar, insbesondere 20 bis 90 bar angewendet. Dabei können in der esten und zweiten Stufe unterschiedliche Drucke verwendet werden. Im allgemeinen wird man jedoch in der ersten und zweiten Absorptionsstufe bei gleichem Druck bzw. bei im wesentlichen gleichem Druck arbeiten, wobei die Druckunterschiede z.B. durch den sich in den Absorptionsstufen einstellenden Druckverlust bewirkt werden. Als Absorptionsstufen werden zweckmäßig Absorptionskolonnen verwendet, im allgemeinen Füllkörperkolonnen oder mit Böden ausgestattete Kolonnen. Die mit den Sauergasen $CO_2$ und/oder $H_2S$ beladene Absorptionsflüssigkeit wird im unteren Teil der ersten Absorptionszone, vorzugsweise im unteren Drittel, insbesondere am Sumpf der ersten Absorptionszone abgezogen.

Anschließend wird die aus der ersten Absorptionsstufe erhaltene beladene Absorptionsflüssigkeit zur Regenerierung in mindestens 2, zweckmäßig 2 bis 5, vorzugsweise 2 oder 3 Entspannungsstufen entspannt, wobei die letzte Entspannungsstufe bei vermindertem Druck gegenüber Atmosphärendruck betrieben wird und gegebenenfalls gleichzeitig zum Ausgleich der Wasserverluste des Systems durch in den am Kopf der zweiten Absorptionsstufe und der Entspannungsstufen sowie der Abstreifzone abgezogenen Gasströmen enthaltenes Wasser am Sumpf der vorletzten Entspannungsstufe eine dem Wasserlust entsprechende Menge Wasserdampf zugeführt wird. Vorzugsweise wird dabei in der letzten Entspannungsstufe ein Druck von 0,3 bis etwa 1 bar, vorzugsweise 0,5 bis etwa 1 bar, insbesondere 0,6 bis etwa 0,9 bar aufrechterhalten. Als Apparate zur Erzeugung des verminderten Drucks in der letzten Entspannungsstufe kommen zur Vakuumerzeugung üblicherweise verweendete Apparate, beispielsweise mechanische Vakuumerzeugungsapparate wie Vakuumpumpen oder Verdichter, z.B. Schraubenverdichter, Zentrifugalverdichter, oder Wasserdampfstrahler in Betracht, wobei die Verwendung von mechanischen Vakuumerzeugungsapparaten vorteilhaft sein kann.

Im allgemeinen werden in den Entspannungsstufen Temperaturen von 35 bis 100°C, vorzugsweise 45 bis 90°C, insbesondere 55 bis 85°C, angewendet.

Zum Ausgleich der Wasserverluste, die bei dem Verfahren durch in den am Kopf der zweiten Absorptionsstufe und der Entspannungsstufen sowie der Abstreifzone abgezogenen Gasströmen enthaltenes Wasser entstehen, wird zweckmäßig am Sumpf der vorletzten Entspannungsstufe eine dem Wasserverlust entsprechende Menge Wasserdampf zugeführt. In der Regel wird das in den abgezogenen Gasströmen enthaltene Wasser im wesentlichen als Wasserdampf abgezogen. Dem Sumpf der vorletzten Entspannungsstufe kann Niederdruck-, Mitteldruck- oder Hochdruckdampf, d.h. z.B. 1,5- bis 100-bar Dampf zugeführt werden. Vorzugsweise verwendet man Dampf im niederen Druckbereich, z.B. 1,5- bis 10-bar-Dampf, vorteilhaft 1,5- bis 5-bar-Dampf, da dieser Niederdruckdampf im allgemeinen wohlfeil zur Verfügung steht.

Das am Kopf der letzten Entspannungsstufe abgezogene Gas kann an die Atmosphäre abgegeben werden oder mit dem aus der vorletzten Entspannungsstufe abgezogenen Gasstrom vermischt und einer weiteren Behandlung zugeführt werden. In einer vorteilhaften Ausführungsform des Verfahrens wird der verminderte Druck in der letzten Entspannungsstufe mittels eines Wasserdampfstrahlers erzeugt und dabei zweckmäßig das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt.

Falls der Wasserdampf aus dem Wasserdampfstrahler am Sumpf der vorletzten Entspannungsstufe zugeführt wird, wird der Wasserdampfstrahler zweckmäßig mit einer solchen Menge Wasserdampf betrieben, wie sie zum Ausgleich der Wasserverluste der Verfahrens erforderlich ist. Es ist jedoch auch möglich, den Wasserdampfstrahler mit einer geringeren als zum Ausgleich der Wasserverluste entsprechenden Wasserdampfmenge zu betreiben und am Sumpf der vorletzten Entspannungsstufe zusätzlich die zum Ausgleich der Wasserverluste noch fehlende Wasserdampfmenge zuzuführen. Zum Betrieb des Wasserdampfstrahler kann Mitteldruck- oder Hochdruckdampf verwendet werden. Vorzugsweise verwendet man Dampf im mittleren Druckbereich, z.B. 5- bis 20-bar-Dampf, vorzugsweise 5- bis 10-bar-Dampf.

Die vorletzte Entspannungsstufe wird zweckmäßig bei einem Druck von etwa 1 bis 30 bar, vorzugsweise etwa 1 bis 25 bar, insbesondere etwa 1 bis 20 bar betrieben.

Für die Entspannung werden zweckmäßig Entspannungsbehälter, die z.B. auch als Kolonnen gestaltet sein können, verwendet. Diese Entspannungsbehälter können frei von besonderen Einbauten sein. Es können jedoch auch mit Einbauten, z.B. mit Füllkörpern, ausgestattete Kolonnen verwendet werden.

Am Kopf der letzten Entspannungsstufe wird ein im wesentlichen die Sauergase $CO_2$ und/oder $H_2S$ enthaltender Gasstrom erhalten, der zweckmäßig entweder mit dem Kopf der vorletzten Entspannungsstufe abgezogenen Gas vereinigt wird oder zusammen mit dem Wasserdampf für den Betrieb des Wasserdampfstrahlers am Sumpf der vorletzten Entspannungsstufe zugeführt wird.

Ein Strom der am Sumpf der letzten Entspannungsstufe erhaltenen Absorptionsflüssigkeit, die in den Entspannungsstufen bereits zu einem großen Teil, zweckmäßig zu mehr als 50%, vorzugsweise zu mehr als 60%, von den Sauergasen $CO_2$ und/oder $H_2S$ befreit worden ist, wird anschließend als Waschflüssigkeit in die erste Absorptionsstufe zurückgeführt und dort zweckmäßig am Kopf der Absorptionsstufe zugegeben. Ein weiterer am Sumpf der letzten und/oder vorletzten Entspannungsstufe erhaltener Strom der Absorptionsflüssigkeit wird zur weiteren Regenerierung einer Abstreifzone zugeführt, in der die noch in diesem Strom enthaltenen Sauergase $CO_2$ und/oder $H_2S$ weitgehend ausgestrieft werden. In einer bevorzugten Ausführungsform der vorstehend beschriebenen Arbeitsweise wird die am Sumpf der letzten Entspannungsstufe erhaltene Absorptionsflüssigkeit vollständig in die erste Absorptionsstufe zurückgeführt, und es wird ein Teilstrom der am Sumpf der vorletzten Entspannungsstufe erhaltenen Absorptionsflüssigkeit zur weiteren Regenierung der Abstreifzone zugeführt. In einer weiteren bevorzugten Ausführungsform wird die am Sumpf der letzten Entspannungsstufe erhaltene Absorptionsflüssigkeit teilweise als Waschflüssigkeit in die erste Absorptionsstufe zurückgeführt, und es wird ein weiterer Teilstrom der am Sumpf der letzten Entspannungsstufe erhaltenen Absorptionsflüssigkeit zur weiteren Regenerierung der Abstreifzone zugeführt. Es ist jedoch auch möglich, einen Teilstrom der am Sumpf der letzten Entspannungsstufe erhaltenen Absorptionsflüssigkeit als Waschflüssigkeit in die erste Absorptionsstufe zurückführen und einen weiteren Teilstrom der am Sumpf der letzten Entspannungsstufe erhaltenen Absorptionsflüssigkeit und einen Teilstrom der am Sumpf der vorletzten Entspannungsstufe erhaltene Absorptionsflüssigkeit zur weiteren Regenerierung der Abstreifzone zuzuführen. Der zur ersten Absorptionsstufe zurückführte Strom und der der Abstreifzone zugeführte Strom verhalten sich im allgemeinen mengenmäßig zueinander wie 10:1 bis 1:2, vorzugsweise 5:1 bis 1:1. Der am Kopf der Abstreifzone erhaltene, im wesentlichen $CO_2$ und/oder $H_2S$ neben Wasserdampf enthaltende Gasstrom kann aus dem System abgezogen werden. Es kann jedoch auch vorteilhaft sein, diesen $CO_2$ und/oder $H_2S$ neben Wasserdampf enthaltenden Gasstrom zur Verringerung der Wasserverluste des Systems in den unteren Teil, vorzugsweise in die untere Hälfte, insbesondere in das untere Drittel der vorletzten Entspannungsstufe zurückzuführen. Als Abstreifzone wird zweckmäßig eine Abstreifkolonne verwendet, im allgemeinen eine Füllkörperkolonne oder eine mit Böden ausgestattete Kolonne. Im allgemeinen wird die Abstreifkolonne bei Temperaturen von 85 bis 115°C, vorzugsweise 85 bis 110°C, insbesondere 90 bis 110°C betrieben.

Die am Sumpf der Abstreifzone erhaltene regenerierte Absorptionsflüssigkeit wird in die zweite Absorptionsstufe zurückgeführt und dort zweckmäßig am Kopf dieser Absorptionsstufe zugegeben.

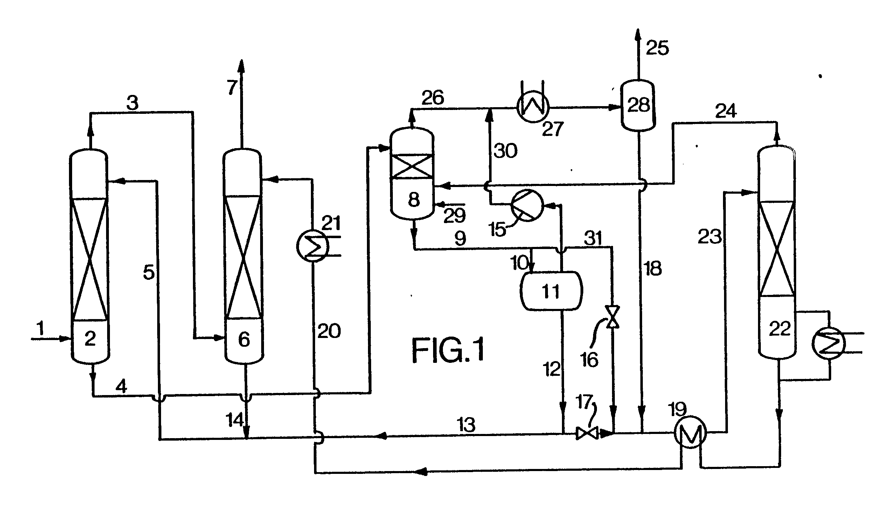

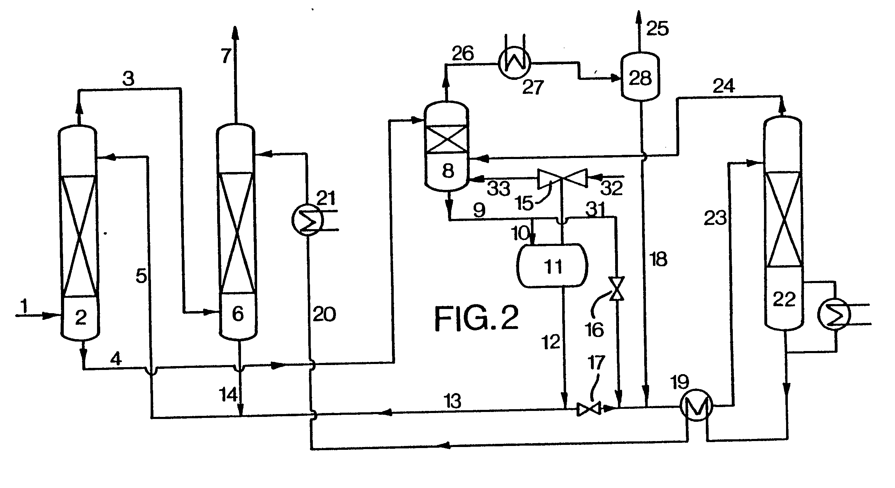

Nachfolgend werden weitere Einzelheiten der Erfindung anhand von zwei Ausführungsbeispielen, deren Verfahrensablauf in den Figuren 1 und 2 schematisch dargestellt ist, erläutert.

Gemäß Figure 1 wird ein $CO_2$ und/oder $H_2S$ enthaltendes Gas, z.B. ein $CO_2$ als Sauergas enthaltendes Synthesegas, über Leitung 1 unter Druck in den Sumpf der ersten Absorptionskolonne 2 gegeben. Gleichzeitig wird über Leitung 5 als Absorptionsflüssigkeit 20 bis 70 gew.-%ige wäßrige Methyldiethanolaminlösung auf den Kopf der ersten Absorptionskolonne gegeben. Das am Kopf der ersten Absorptionskolonne erhaltene vorgewaschene Gas wird zur Feinreinigung über Leitung 3 in den Sumpf der zweiten Absorptionskolonne 6 gegeben. Gleichzeitig wird über Leitung 20 als Absorptionsflüssigkeit 20 bis 70 gew.%ige wäßrige Methyldiethanolaminlösung, die aus der Abstreifkolonne 22 erhalten wird und praktisch frei von Sauergasen ist, auf den Kopf der zweiten Absorptionskolonne gegeben. Das geswaschene Gas wird über Leitung 7 am Kopf der zweiten Absorptionskolonne 6 abgezogen. Die am Sumpf der zweiten Absorptionskolonne erhaltene mit den Sauergasen vorbeladene wäßrige Absorptionsflüssigkeit wird über Leitungen 14 und nach Vereinigung mit der über Leitungen 12 und 13 aus der letzten Entspannungsstufe 11 erhaltenen Absorptionsflüssigkeit auf den Kopf der ersten Absorptionskolonne 2 gegeben. Die am Sumpf der ersten Absorptionskolonne 2 erhaltene, mit $CO_2$ und/oder $H_2S$ beladene wäßrige Absorptionsflüssigkeit wird zur Regenerierung über Leitung 4 in einem ersten Entspannungsverdampfungsbehälter 8 entspannt, z.B. über ein Ventil oder vorzugsweise über eine Entspannungsturbine. Hierbei wird ein Zwischenentspannungsgas aus der Absorptionsflüssigkeit freigesetzt, das über Leitung 26 abgezogen wird mit dem über Leitung 30 aus der letzten Entspannungsstufe 11 abgezogenen Gas vereinigt wird. Nach Passieren des Wärmetauschers 27 und des Abscheidegefäßes 28 werden die vereinigten Gasströme über Leitung 25 abgezogen. Im Abscheidegefäß 28 abgeschiedene Flüssigkeit wird über Leitung 18 abgezogen. In den Sumpf des Enspannungsbehälters 8 wird gegebenenfalls zum Ausgleich der Wasserverluste des Systems über Leitung 29 Wasserdampf, z.B. 2,5 bar Niederdruckdampf, eingeleitet. Am Boden des Entspannungsbehälters 8 wird die teilentspannte Absorptionsflüssigkeit über Leitung 9 abgezogen und in einer ersten Variante des Verfahrens bei geschlossenem Ventil 16 und geöffnetem Ventil 17 ganz über Leitung 10 in einen zweiten Entspannungsbehälter 11 entspannt, in dem z.B. mittels der Vakuumpumpe 15 ein Druck von z.B. 0,5 bar bis weniger als Atmosphärendruck aufrechterhalten wird. Hierbei wird ein sauergasreiches Entspannungsgas freigesetzt, das über Leitung 30 am Kopf des Entspannungsbehälters 11 abgezogen wird und mit dem aus dem ersten Entspannungsbehälter 8 über Leitung 26 abgezogenen Gas vereinigt wird. Die am Sumpf des Entspannungsbehälters 11 über Leitung 12 abgezogene entspannte Absorptionsflüssigkeit wird teilsweise über Leitungen 13 und 5 zum Kopf der Absorptionskolonne 2 zurückgeführt und zum anderen Teil über Leitung 23 auf den Kopf der Abstreifkolonne 22 gegeben.

In einer zweiten Variante des Verfahrens wird bie geschlossenem Ventil 17 und geöffnetem Ventil 16 die über Leitung 9 abgezogene teilentspannte Absorptionsflüssigkeit zu einem Teil über Leitung 10 in den zweiten Entspannungsbehälter 11 entspannt und zum anderen Teil über Leitungen 31 und 23 auf den Kopf der Abstreifkolonne 22 gegeben. Die am Sumpf des Entspannungsbehälters 11 über Leitung 12 abgezogene entspannte Absorptionsflüssigkeit wird bei der zweiten Variante ganz über Leitungen 13 und 5 zum Kopf der Absorptionskolonne 2 zurückgeführt.

Die am Sumpf der Absorptionskolonne 22 erhaltene regenerierte Absorptionsflüssigkeit wird über Leitung 20 nach Passieren der Wärmetauscher 19 und 21 auf den Kopf der zweiten Absorptionskolonne 6 zurückgeführt. Der am Kopf der Abstreifkolonne 22 erhaltene $CO_2$ und/oder $H_2S$ enthaltende Abgastrom wird über Leitung 24 zweckmäßig dem unteren Teil des Entspannungsbehälters 8 zugeführt. Es ist jedoch auch möglich, den am Kopf der Abstriefkolonne 22 erhaltenen Abgasstrom unmittelbar aus dem System abzuziehen, ohne ihn noch vorher dem Entspannungsbehälter 8 zuzuführen.

In einem weiteren beispielhaften Ausführunsbeispiel (vgl. Fig. 2) wird wie im ersten Ausführungsbeispiel verfahren, wobei jedoch anstelle einer Vakuumpumpe der Dampfstrahler 15 zur Erzeugung des verminderten Drucks im zweiten Entspannungsbehälter 11 verwendet wird, dem über Leitung 32 z.B. eine solche Menge Wasserdampf zugeführt wird, wie sie zum Ausgleich der Wasserverluste des Systems erforderlich ist. Das am Kopf des Entspannungsbehälters 11 abgezogene Gas wird zusammen mit dem Wasserdampf, mit dem der Wasserdampfstrahler 15 betrieben wird, über Leitung 33 am Sumpf des ersten Entspannungsbehälters 8 zugeführt.

Das folgende Beispiel veranschaulicht die Erfindung.

### Beispiel

Man verwendet eine Gaswaschanlage entsprechend der Fig. 2 mit zwei hintereinandergeschalteten Absorptionskolonnen, zwei hintereinandergeschalteten Entspannungsbehältern und einer Abstreifkolonne. In den Absorptionskolonnen werden 9800 kmol/h eines $CO_2$-haltigen Synthesegases mit einer 50 gew.%igen wäßrigen Methyldiethanolamin-Lösung als Absorptionsflüssigkeit gewaschen. Das zu reinigende Synthesegas wird mit einem Druck von 28 bar am Sumpf der ersten Absorptionskolonne zugeführt. Das zu reinigende, aus einem Steam Reformer stammerde Gas hat die folgende Zusammensetzung:

| | |
|---|---|
| $CO_2$ | 18,3 Vol.% |
| CO | 0,4 Vol.% |
| $H_2$ | 61,0 Vol.% |
| $N_2$ | 20,0 Vol.% |
| $CH_4$ | 0,1 Vol.% |
| Ar | 0,2 Vol.% |

Die Temperatur der Absorptionsflüssigkeit im Zulauf zur ersten Absorptionskolonne beträgt 60°C. Die Temperatur der der zweiten Absorptionskolonne zugeführten Absorptionsflüssigkeit beträgt 75°C. Das am Kopf der zweiten Absorptionskolonne abgezogene gereinigte Synthesegas hat die folgende Zusammensetzung:

| $CO_2$ | 0,01 Vol.% |
|---|---|
| $CO$ | 0,5 Vol.% |
| $H_2$ | 74,6 Vol.% |
| $.N_2$ | 24,5 Vol.% |
| $CH_2$ | 0,2 Vol.% |
| $Ar$ | 0,3 Vol.% |

Die die erste Absorptionskolonne am Sumpf verlassende beladene Absorptionsflüssigkeit wird im ersten Entspannungsbehälter auf einen Druck von 5 bar entspannt. Am Kopf des ersten Entspannungsbehälters werden 1150 kmol/h eines Entspannungsgases abgezogen. Die am Boden des zweiten Entspannungsbehälters abgezogene Absorptionsflüssigkeit wird anschließend in den zweiten Entspannungsbehälter entspannt, in dem mittels eines Wasserdampfstrahlers ein Druck von 0,7 bar aufrechterhalten wird. Die am Boden des zweiten Entspannungsbehälters erhaltene entspannte Absorptionsflüssigkeit wird zu etwa 3/4 in die erste Absorptionskolonne zurückgeführt. Der restliche Teil wird in der Abstreifkolonne regeneriert und danach in die zweite Absorptionskolonne zurückgeführt.

Nach dem neuen Verfahren können Absorptionskolonnen mit deutlich geringerem Durchmesser und geringeren Bodenzahlen verwendet werden, wodurch eine erhebliche Reduktion der Investitionskosten für die Gaswaschanlage erzielt werden kann.

**Patentansprüche**

1. Verfahren zum Entfernen von $CO_2$ und/oder $H_2S$ aus $CO_2$ und/oder $H_2S$ enthaltenden Gasen, bei dem man

a) das $CO_2$ und/oder $H_2S$ enthaltende Gas in einer ersten Absorptionsstufe bei Temperaturen von 40 bis 100°C mit einer 20 bis 70 Gew.-% Methyldiethanolamin enthaltenden wäßrigen Absorptionsflüssigkeit behandelt,

b) das am Kopf der ersten Absorptionsstufe erhaltene Gas einer zweiten Absorptionsstufe zuführt, in der es zur weiteren Entfernung von $CO_2$ und/oder $H_2S$ bei Temperaturen von 30 bis 90°C mit einer 20 bis 70 Gew.-% Methyldiethanolamin enthaltenden wäßrigen Absorptionsflüssigkeit behandelt wird, die einen geringeren Gehalt an $CO_2$ und/oder $H_2S$ aufweist als die der ersten Absorptionsstufe zugeführte Absorptionsflüssigkeit,

c) am Kopf der zweiten Absorptionsstufe das behandelte Gas abzieht,

d) die am Boden der zweiten Absorptionsstufe erhaltene mit $CO_2$ und/oder $H_2S$ vorbeladene wäßrige Absorptionsflüssigkeit am Kopf der ersten Absorptionsstufe zuführt,

e) die im unteren Teil der ersten Absorptionsstufe erhaltene, mit $CO_2$ und/oder $H_2S$ beladene wäßrige Absorptionsflüssigkeit zur Regenerierung

in mindestens zwei Entspannungsstufen entspannt und dabei die letzte Entspannungsstufe bei vermindertem Druck gegenüber Atmosphärendruck betreibt,

f) einen am Sumpf der letzten Entspannungsstufe erhaltenen Strom der Absorptionsflüssigkeit in die erste Absorptionsstufe zurückführt,

g) einen weiteren am Sumpf der letzten und/oder vorletzten Entspannungsstufe erhaltenen Strom der Absorptionsflüssigkeit zur weiteren Regenerierung einer Abstreifzone zuführt und

h) die am Sumpf der Abstreifzone erhaltene regenerierte Absorptionsflüssigkeit in die zweite Absorptionsstufe zurückführt.

2. Verfahren nach Anspruch 1, dadurch gekennzeichnet, daß man zum Ausgleich der Wasserverluste durch in den am Kopf der zweiten Absorptionsstufe und/oder aus den Entspannungsstufen und/oder aus der Abstreifzone abgezogenen Gasströmen enthaltenes Wasser am Sumpf der vorletzten Entspannungsstufe ein dem Wasserverlust entsprechende Menge Wasserdampf zuführt.

3. Verfahren nach Anspruch 1 und 2, dadurch gekennzeichnet, daß der verminderte Druck in der letzten Entspannungsstufe mittels eines Wasserdampfstrahlers erzeugt wird.

4. Verfahren nach Anspruch 3, dadurch gekennzeichnet, daß das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.

**Revendications**

1. Procédé pour l'élimination de $CO_2$ et/ou d'$H_2S$ de gaz contenant du $CO_2$ et/ou de l'$H_2S$, dans lequel

a) on traite le gaz contenant du $CO_2$ et/ou de l'$H_2S$ dans un premier étage d'absorption, à des températures de 40 à 100°C, par un liquide d'absorption aqueux contenant de 20 à 70% en poids de méthyldiéthanolamine,

b) on envoie le gaz obtenu en tête du premier étage d'absorption dans un deuxième étage d'absorption dans lequel, pour l'élimination plus poussée de $CO_2$ et/ou d'$H_2S$, il est traité, à des températures de 30 à 90°C, par un liquide d'absorption aqueux contenant de 20 à 70% en poids de méthyldiéthanolamine et présentant une plus faible teneur en $CO_2$ et/ou en $H_2S$ que le liquid d'absorption introduit dans le premier étage d'absorption,

c) en tête du deuxième étange d'absorption, on extrait le gaz traité,

d) on envoie en tête du premier étage d'absorption le liquide d'absorption aqueux déjà chargé de $CO_2$ et/ou d'$H_2S$, obtenu au bas du deuxième étage d'absorption,

e) on détend, dans deux étages de détente au moins, le liquide d'absorption aqueux chargé de $CO_2$ et/ou d'$H_2S$, obtenu à la partie inférieure du premier étage d'absorption, en vue de sa régénération, le dernier étage de détente étant exploité sous presson réduite par rapport à la pression atmosphérique,

f) on renvoie dans le premier étage d'absorption un courant du liquide d'absorption obtenu au bas du dernier étage de détente,

g) on envoie dans une zone de strippage, en vue de ·sa régénération plus poussée, un autre courant du liquide d'absorption obtenu au bas du dernier et/ou de l'avant-dernier étage de détente, et

h) on renvoie dans le deuxième étage d'absorption le liquide d'absorption régénéré, obtenu au bas de la zone de strippage.

2. Procédé selon la revendication 1, caractérisé en ce que pour compenser les pertes d'eau dues à l'eau contenue dans les courants de gaz extraits en tête du deuxième étage d'absorption et/ou dans les étages de détente et/ou dans la zone de strippage, on envoie au bas de l'avant-dernier étage de détente une quantité de vapeur d'eau correspondant à la perte d'eau.

3. Procédé selon la revendication 1 ou 2, caractérisé en ce que la pression réduite dans le dernier étage de détenté est produite au moyen d'une trompe à vapeur d'eau.

4. Procédé selon la revendication 3, caractérisé en ce que le gaz extrait en tête du dernier étage de détente est renvoyé au bas de l'avant-dernier étage de détente avec la vapeur d'eau avec laquelle fonctionne la trompe à vapeur d'eau.

**Claims**

1. A process for removing $CO_2$ and/or $H_2S$ from a gas containing $CO_2$ and/or $H_2S$ in which,

a) the gas containing $CO_2$ and/or $H_2S$ is treated, in a first absorption stage, at from 40 to 100°C, with an aqueous absorption liquid containing from 20 to 70% by weight of methyldiethanolamine,

b) the gas obtained at the top of the first absorption stage is fed to a second absorption stage in which, to effect removal, of $CO_2$ and/or $H_2S$, it is treated at from 30 to 90°C with an aqueous absorption liquid which contains from 20 to 70% by weight of methyldiethanolamine and has a lower content of $CO_2$ and/or $H_2S$ than the absorption liquid fed into the first absorption stage,

c) the treated gas is taken off at the top of the second absorption stage,

d) the aqueous absorption liquid obtained at the bottom of the second absorption stage and preladen with $CO_2$ and/or $H_2S$ is fed to the top of the first absorption stage,

e) the aqueous absorption liquid obtained in the lower part of the first absorption stage and laden with $CO_2$ and/or $H_2S$ is let down in two or more flash stages in order to regenerate it, the final flash stage being operated under reduced pressure,

f) a stream of absorption liquid obtained at the bottom of the final flash stage is recycled to the first absorption stage,

g) a further stream of absorption liquid obtained at the bottom of the final and/or penultimate flash stage is fed to a stripping zone for further regeneration, and

h) the regenerated absorption liquid obtained at the bottom of the stripping zone is recycled to the second absorption stage.

2. A process as claimed in claim 1, wherein, in order to compensate for the water losses as a result of water being present in the gas streams taken off at the top of the second absorption stage and/or from the flash stages and/or from the stripping zone, and amount of steam corresponding to the water loss is fed to the bottom of the penultimate flash stage.

3. A process as claimed in claims 1 and 2, wherein the reduced pressure in the final flash stage is produced by means of a steam ejector.

4. A process as claimed in claim 3, wherein the gas taken off at the top of the final flash stage is fed, together with the steam used for operating the steam ejector, to the bottom of the penultimate flash stage.

FIG.1

FIG.2